# EUROPÄISCHE PATENTSCHRIFT

(11) **EP 1 156 890 B1**
(45) Veröffentlichungstag und Bekanntmachung des Hinweises auf die Patenterteilung: **07.12.2005**
(21) Anmeldenummer: 00902653.5
(22) Anmeldetag: 24.02.2000
(51) Int. Cl.: B05D 7/00

(54) **HOCHKRATZFESTE MEHRSCHICHTLACKIERUNG, VERFAHREN ZU IHRER HERSTELLUNG UND IHRE VERWENDUNG**
HIGHLY SCRATCH-RESISTANT MULTILAYER COAT, METHOD FOR PRODUCING AND USE OF THE SAME
LAQUAGE MULTICOUCHE HAUTEMENT RESISTANT AUX RAYURES, SON PROCEDE DE REALISATION ET SON UTILISATION

(30) Priorität: 25.02.1999 DE 19908001
(43) Veröffentlichungstag der Anmeldung: 28.11.2001
(73) Patentinhaber: BASF Coatings Aktiengesellschaft, 48165 Münster (DE)
(72) Erfinder: CAMPBELL, Donald, Hartland, MI 48353 (US); BAUMGART, Hubert, D-48163 Münster (DE); FARWICK, Thomas, D-48727 Billerbeck (DE); RÖCKRATH, Ulrike, D-48308 Senden (DE)
(74) Vertreter: Fitzner, Uwe
(86) Internationale Anmeldenummer: PCT/EP2000/000837
(87) Internationale Veröffentlichungsnummer: WO 2000/050178

(56) Entgegenhaltungen:
- WO-A-99/08808
- WO-A-99/57207
- US-A- 5 639 554

## Beschreibung

Die vorliegende Erfindung betrifft eine neue hochkratzfeste Mehrschichtlackierung enthaltend einen Mehrschicht-Klarlack. Des weiteren betrifft die vorliegende Erfindung ein neues Verfahren zur Herstellung hochkratzfester Mehrschichtlackierungen, welches auf dem Naß-in-naß-Verfahren beruht. Nicht zuletzt betrifft die vorliegende Erfindung die Verwendung der neuen hochkratzfesten Mehrschichtlackierungen insbesondere in der Automobilserienlackierung und der industriellen Lackierung.

Die Anforderungen an die Beständigkeit von Decklacken, welche der Witterung, insbesondere der Sonneneinstrahlung und dem sauren Regen, ausgesetzt sind und zudem auch noch häufiger mechanischer Beanspruchung, insbesondere durch Waschbürstenreinigungsanlagen, werden stetig höher. Dies gilt ganz besonders für die Fahrzeuglackierungen, welche diese Anforderungen erfüllen und zusätzlich noch höchste optische Ansprüche an Glanz, Oberflächenglätte und Farbe befriedigen müssen.

Bisher wurde dieses Problem dadurch gelöst, daß entsprechend den gestiegenen Anforderungen an die Umweltverträglichkeit eine im wesentlichen aus wäßrigen Beschichtungsstoffen aufgebaute Mehrschichtlackierung auf die Substrate appliziert wird. Im Falle von Metallsubstraten wird diese bekanntermaßen aus einem wäßrigen Elektrotauchlack, einem Wasserfüller, einem Wasserbasislack und einem lösemittelhaltigen Klarlack hergestellt. Der Elektrotauchlack und der Wasserfüller werden jeweils nach ihrer Applikation eingebrannt und bilden dann die Grundierung. Hierauf wird der Wasserbasislack appliziert und zwischengetrocknet. Auf diese noch nicht ausgehärtete Schicht wird der Klarlack aufgetragen, wonach die beiden Schichten gemeinsam gehärtet werden (Naß-in-naß-Verfahren). Werden Kunststoffe als Substrate verwendet, werden bekanntermaßen an Stelle der Elektrotauchlacke Hydrogrundierungen angewandt.

Das Naß-in-naß-Verfahren für die Herstellung von mehrschichtigen Decklackierungen ist beispielsweise in den Patentschriften US-A-3,639,147, DE-A-3 3 33 072, DE-A-38 14 853, GB-A-2 012 191, US-A-3,953,644, EP-A-0 260 447, DE-A-39 03 804, EP-A-0 320 552, DE-A-36 28 124, US-A-4,719,132, EP-A-0 297 576, EP-A-0 069 936, EP-A-0 089 497, EP-A-0 195 931, EP-A-0228 003, EP-A-0 038 127 und DE-A-28 18 100 beschrieben.

Für das optische oder visuelle Erscheinungsbild und die Witterungsbeständigkeit sind vor allem die beiden obersten Schichten der Mehrschichtlackierungen verantwortlich. So gibt der Wasserbasislack der Mehrschichtlackierung die Farbe und/oder optischen Effekte wie Metallic-Effekte oder Interferenzeffekte, während der Klarlack neben der Kratz- und Etchbeständigkeit, d. h. die Beständigkeit gegen umweltbedingte schädigende Substanzen, für das sogenannte Appearance, d. h. der Glanz, die Brillanz und der Verlauf, sorgt. Wasserbasislack und Klarlack müssen hierbei sehr fein aufeinander abgestimmt sein, um einen Verbund mit dem gewünschten vorteilhaften Eigenschaftsprofil zu liefern.

Wasserbasislacke sowie die entsprechenden Lackierungen, welche diesen Anforderungen im wesentlichen gerecht werden, sind aus den Patentschriften EP-A-0 089 497, EP-A-0 256 540, EP-A-0 260 447, EP-A-0 297 576, WO 96/12747, EP-A-0 523 610, EP-A-0 228 003, EP-A-0 397 806, EP-A-0 574 417, EP-A-0 531 510, EP-A-0 581 211, EP-A-0 708 788, EP-A-0 593 454, DE-A-43 28 092, EP-A-0 299 148, EP-A-0 394 737, EP-A-0 590 484, EP-A-0 234 362, EP-A-0 234 361, EP-A-0 543 817, WO 95/14721, EP-A-0 521 928, EP-A-0 522 420, EP-A-0 522 419, EP-A-0 649 865, EP-A-0 536 712, EP-A-0 596 460, EP-A-0 596 461, EP-A-0 584 818, EP-A- 0 669 356, EP-A-0 634 431, EP-A-0 678 536, EP-A-0 354 261, EP-A-0 424 705, WO 97/49745, WO 97/49747 oder EP-A-0 401 565 bekannt.

Diese Wasserbasislacke enthalten vor allem anionisch stabilisierte Polyurethane, wobei als Neutralisationsmittel mehrfach funktionelle Amine und/oder Aminoalkohole, wie Triethylamin, Methylethanolamin und/oder Dimethylethanolamin Verwendung finden.

Die lösemittelhaltigen Klarlacke sind üblicherweise Einkomponenten(1K)-, Zweikomponenten(2K)- oder Mehrkomponenten(3K, 4K)-Klarlacke, wie sie beispielsweise in den Patentschriften EP-A-0 604 992, WO 94/22969, EP-A-0 596 460 oder WO 92/22615 beschrieben werden.

Zwar erhält man auf diesem Wege Mehrschichtlackierungen, die den optischen Anforderungen genügen, indes sind die Einkomponenten(1K)-Klarlacke oftmals nicht genügend witterungsbeständig, wogegen die Zweikomponenten(2K)- oder Mehrkomponenten(3K, 4K)-Klarlacke oftmals nicht genügend abriebfest sind.

Es hat außerdem nicht an Versuchen gefehlt, diesen Problemen durch Verwendung von Pulverklarlacken, wie sie beispielsweise aus der deutschen Patentschrift DE-A-42 22 194 bekannt sind, von Pulverslurry-Klarlacken, wie sie beispielsweise aus der deutschen Patentschrift DE-A-196 13 547 bekannt sind, oder von UV-härtbaren Klarlacken, wie sie beispielsweise in den Patentschriften EP-A-0 540 884, EP-A- 0 568 967 oder US-A-4,675,234 beschrieben werden, Herr zu werden. Indes handelt man sich dann u. U. andere Nachteile ein, wie etwa eine nicht völlig befriedigende Zwischenschichthaftung, ohne daß die Probleme der Kratzfestigkeit oder der Etchbeständigkeit völlig gelöst wären.

Aus den Patentschriften US-A-5,474,811, US-A-5,356,669, US-A-5,605,965, WO 94/10211, WO 94/10212, WO 94/10213, EP-A-0 594 068, EP-A-0 594 071 oder EP-A-0 594 142 sind Beschichtungsstoffe bekannt, welche mindestens ein Oligomer und/oder Polymer mit mindestens einer seitenständigen Carbamatgruppe der Formel:

**-O-(CO)-NH**_{**2**}

und mindestens einem Vernetzungsmittel, enthaltend mindestens 2 funktionelle Gruppen, welche mit der Carbamatgruppe Vernetzungsreaktionen eingehen, enthalten. Diese bekannten Beschichtungsmittel liefern Klarlacke, welche eine außerordentlich hohe Kratzfestigkeit und Etchbeständigkeit aufweisen. Als Vernetzungsmittel werden vor allem hochveretherte Melaminformaldehydharze angewandt. Die Vernetzung selbst ist säurekatalysiert, wobei als Katalysatoren bevorzugt starke Protonensäuren, insbesondere Sulfonsäuren, welche i. d. R. mit Aminen blockiert sind, verwendet werden.

Indes können diese vorteilhaften Beschichtungsstoffe nicht gemeinsam mit den vorstehend genannten Wasserbasislacken zum Aufbau von Mehrschichtlackierungen verwendet werden, weil es hierbei häufig in der Klarlackschicht zu Oberflächenstörungen durch den sogenannten Schrumpfeffekt (wrinkling) kommt.

Aufgabe der vorliegenden Erfindung ist es, eine neue Mehrschichtlackierung bereitzustellen, welche die Nachteile des Standes der Technik nicht mehr länger aufweist, sondern neben einem hervorragenden optischen Eigenschaftsprofil bzw. einer hervorragenden Appearance eine hohe Kratzfestigkeit und Etchbeständigkeit aufweist, wobei Oberflächenstörungen nicht länger auftreten. Außerdem war es die Aufgabe der vorliegenden Erfindung ein neues Verfahren zur Herstellung von Mehrschichtlackierungen bereitzustellen, welches in einfacher Weise sicher und zuverlässig die neuen Mehrschichtlackierungen liefert.

Demgemäß wurde die neue hochkratzfeste Mehrschichtlackierung auf einem gegebenenfalls grundierten Substrat gefunden, welche
(A) eine Basislackschicht,
(B) eine erste Klarlackschicht als Zwischenschicht und
(C) eine zweite Klarlackschicht als oberste Schicht,
   in dieser Reihenfolge übereinander liegend enthält und welche dadurch gekennzeichnet ist, daß die zweite Klarlackschicht (C) herstellbar ist aus einem Beschichtungsstoff (C), enthaltend
   (C1) mindestens ein Oligomer und/oder Polymer mit mindestens einer seitenständigen Carbamatgruppe und/oder Allophanatgruppe (c11), insbesondere Carbamatgruppe (c11), der Formeln:

      **-O-(CO)-NH**_{**2**} **-O-(CO)-NH-(CO)-NH**_{**2**}

      und
   (C2) mindestens einem Vernetzungsmittel, enthaltend mindestens 2 funktionelle Gruppen (c21), welche mit der Carbamatgruppe und/oder Allophanatgruppe (c11) Vernetzungsreaktionen eingehen.

Im folgenden wird die neue hochkratzfeste Mehrschichtlackierung als "erfindungsgemäße Mehrschichtlackierung" bezeichnet.

Außerdem wurde das neue Verfahren zur Herstellung einer hochkratzfesten Mehrschichtlackierung, das mindestens die folgenden Verfahrensschritte umfaßt:
(I) Applikation eines Basislacks (A) auf einem gegebenenfalls grundierten Substrat,
(II) Zwischentrocknen des applizierten Basislacks (A),
(III) Applikation eines ersten Klarlacks (B)
(IV) gemeinsames Aushärten der in den Verfahrensschritten (I) und (III) applizierten Schichten (A) und (B) (Naß-in-naß-Verfahren); gefunden, welches dadurch gekennzeichnet ist, daß
(V) auf die im Verfahrensschritt (IV) ausgehärtete Klarlackschicht (B) eine stofflich hiervon verschiedene zweite Klarlackschicht (C), enthaltend
   (C1) mindestens ein Oligomer und/oder Polymer mit mindestens einer seitenständigen Carbamatgruppe und/oder Allophanatgruppe (c11) insbesondere Carbamatgruppe (c11), der Formeln:

      **-O-(CO)-NH**_{**2**} **-O-(CO)-NH-(CO)-NH**_{**2**}

      und
   (C2) mindestens einem Vernetzungsmittel, enthaltend mindestens 2 funktionelle Gruppen (c21), welche mit der Carbamatgruppe und/oder Allophanatgruppe Vernetzungsreaktionen eingehen;
   appliziert und
(VI) ausgehärtet wird.

Im folgenden wird das neue Verfahren zur Herstellung einer hochkratzfesten Mehrschichtlackierung der Kürze halber als "erstes erfindungsgemäßes Verfahren" bezeichnet.

Desweiteren wurde das neue Verfahren zur Herstellung einer hochkratzfesten Mehrschichtlackierung, das mindestens die folgenden Verfahrensschritte umfaßt:
(I) Applikation eines Basislacks (A) auf einem gegebenenfalls grundierten Substrat,
(II) Zwischentrocknen des applizierten Basislacks (A) und
(III) Applikation eines ersten Klarlacks (B); gefunden, welches dadurch gekennzeichnet ist, daß
(IV) der applizierte Klarlack (B) zwischengetrocknet wird und
(V) auf die zwischengetrocknete Klarlackschicht (B) die stofflich hiervon verschiedene zweite Klarlackschicht (C) aufgertragen wird, wonach
(VI) die Schichten (A), (B) und (C) gemeinsam eingebrannt werden.

Im Hinblick auf den Stand der Technik war es überraschend und für den Fachmann nicht vorhersehbar, daß die Aufgabe, welche der vorliegenden Erfindung zugrundeliegt, mit Hilfe der erfindungsgemäßen Mehrschichtlackierung und des erfindungsgemäßen Verfahrens gelöst werden konnte. Insbesondere war es überraschend, daß trotz des Mehrschichtaufbaus des Klarlacks keine Probleme der Zwischenschichthaftung auftreten.

Der erfindungswesentliche Bestandteil der erfindungsgemäßen Mehrschichtlackierung ist die zweite Klarlackschicht (C).

Sie ist herstellbar aus einem Beschichtungsstoff (C), welche als erste wesentliche Komponente mindestens ein Oligomer und/oder Polymer (C1) mit mindestens einer seitenständigen Carbamatgruppe und/oder Allophanatgruppe (c11); insbesondere Carbamatgruppe (c11) der Formeln:

**-O-(CO)-NH**_{**2**} **-O-(CO)-NH-(CO)-NH**_{**2**}

enthält.

Als oligomere und/oder polymere (C1) kommen grundsätzlich alle üblichen und bekannten Oligomere oder Polymere in Betracht. Beispiele geeigneter Oligomere und Polymere sind lineare und/oder verzweigte und/oder blockartig, kammartig und/oder statistisch aufgebaute Copolymerisate von ethylenisch ungesättigten Monomeren, insbesondere Poly(meth)acrylate, sowie Polyester, Alkyde, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe, von denen die Copolymerisate von ethylenisch ungesättigten Monomeren, insbesondere Poly(meth)acrylate, besonders vorteilhaft sind und deshalb besonders bevorzugt verwendet werden.

Die Einführung der Carbamatgruppe (c11) kann durch den Einbau von Monomeren, welche diese Gruppen (c11) enthalten, erfolgen. Beispiele geeigneter Monomere dieser Art sind ethylenisch ungesättigte Monomere, welche eine Carbamatgruppe oder eine Allophanatgruppe (c11) enthalten.

Beispiele geeigneter ethylenisch ungesättigter Monomere, welche eine Carbamatgruppe (c11) enthalten, werden in den Patentschriften US-A- 3,479,328, US-A-3,674,838, US-A- 4,126,747, US-A- 4,279,833 oder US-A-4,340,497 beschrieben.

Die Einführung der Carbamatgruppe (c11) kann aber auch durch polymeranaloge Reaktionen in die Oligomeren und/oder Polymeren (C1) eingeführt werden. Beispiele geeigneter Methoden dieser Art sind aus den Patentschriften US-A-4,758,632, US-A-4,301,257 oder US-A- 2,979,514 bekannt.

Beispiele für erfindungsgemäß besonders bevorzugt zu verwendende Poly(meth)acrylate (C1) sind aus den Patentschriften US-A-5,474,811, US-A-5,356,669, US-A-5,605,965, WO 94/10211, WO 94/10212, WO 94/10213, EP-A-0 594 068, EP-A-0 594 071 oder EP-A-0 594 142 bekannt.

Zur Einführung von Allophanatgruppen (c11) werden Oligomere und Polymere, welche mindestens zwei, vorzugsweise mindestens drei primäre und/oder sekundäre, insbesondere aber primäre, Hydroxylgruppen aufweisen, mit Allophansäurealkyl- und arylestern bei 30 bis 200 °C, vorzugsweise 50 bis 160 °C, besonders bevorzugt 60 bis 150 °C und insbesondere 80 bis 140 °C transallophanatisiert. Die Reaktion wird in Lösung oder in Masse, vorzugsweise in Lösung durchgeführt. Es empfiehlt sich, dem Reaktionsgemisch übliche und bekannte Inhibitoren wie Trialkylphosphite, insbesondere Triisodecylphosphit, zuzusetzen. Außerdem ist es von Vorteil, übliche und bekannte Umesterungskatalysatoren wie Zinnverbindungen, insbesondere Dibutylzinndioxid, zu verwenden.

Beispiele geeigneter, erfindungsgemäß zu verwendender Allophanate sind Allophansäuremethyl-, Allophansäureethyl-, Allophansäurepropyl-, Allophansäurebutyl-, Allophansäurepentylester oder Allophansäurephenylester, von denen Allophansäuremethyl- und Allophansäureethylester besonders vorteilhaft sind und deshalb erfindungsgemäß besonders bevorzugt verwendet werden.

Als erfindungsgemäß zu verwendende Oligomere und Polymere, welche mindestens zwei, vorzugsweise mindestens drei primäre und/oder sekundäre, insbesondere aber primäre, Hydroxylgruppen aufweisen, kommen vorzugsweise lineare und/oder verzweigte und/oder blockartig, kammartig und/oder statistisch aufgebaute Copolymerisate von ethylenisch ungesättigten Monomeren, insbesondere Poly(meth)acrylate, sowie Polyester, Alkyde, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester, Polyharnstoffe, oligomere Polyole, welche aus Oligomeren, die durch Metathesereaktionen von acyclischen Monoolefinen und cyclischen Monoolefinen gewonnen werden, durch Hydroformylierung und anschließender Hydrierung erhältlich sind; oder aliphatische Polyole in Betracht, von denen die Copolymerisate von ethylenisch ungesättigten Monomeren, insbesondere die Poly(meth)acrylate, besonders vorteilhaft sind und deshalb besonders bevorzugt verwendet werden.

Neben dem Hydroxylgruppen können die genannten Oligomere und Polymere noch andere funktionelle Gruppen wie Acryloyl-, Ether-, Amid-, Imid-, Thio-, Carbonat-oder Epoxidgruppen enthalten.

Die zweite wesentliche Komponente des erfindungsgemäß zu verwendenden Beschichtungsstoffs (B) ist das Vernetzungsmittel (C2).

Beispiele geeigneter Vernetzungsmittel (C2) sind Aminoplastharze, insbesondere Melaminformaldehydharze, Polysiloxane, Verbindungen mit mindestens einer cyclischen Carbonatgruppe und/oder Polyanhydride, insbesondere aber Aminoplastharze.

Hierbei kann jedes für Decklacke oder transparente Klarlacke geeignete Aminoplastharz oder eine Mischung aus solchen Aminoplastharzen (C2) verwendet werden. Insbesondere kommen die üblichen und bekannten Aminoplastharze in Betracht, deren Methylol- und/oder Methoxymethylgruppen z. T. mittels Carbamat-oder Allophanatgruppen defunktionalisiert sind. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Beispiele geeigneter Siloxane (C2) sind Siloxane mit mindestens einer Trialkoxy-oder Dialkoxysilangruppe wie Trimethoxysiloxan.

Ein Beispiel eines geeigneten Polyanhydrids (C2) ist Polysuccinsäureanhydrid.

Als weitere wesentliche Komponente enthält der erfindungsgemäß zu verwendende Beschichtungsstoff (C) mindestens eine gegebenenfalls blockierte Säure als Vernetzungskatalysator (C 3).

Beispiele geeigneter Vernetzungskatalysatoren (C3) sind p-Toluolsulfonsäure, Dinonylnaphthalindisulfonsäure, Dodecylbenzolsulfonsäure oder saure Phosphorsäureester. Weitere Beispiele geeigneter Vernetzungskatalysatoren (C 3) gehen aus der Patentschrift US-A- 5,605,965 hervor. Beispiele geeigneter Blockierungsmittel sind Amine.

Der erfindungsgemäß zu verwendende Beschichtungsstoff (C) kann mindestens eine Verbindung (C4) mit mindestens einer Epoxidgruppe enthalten. Vorteilhafterweise handelt es sich hier bei um ein Oligomer oder Polymer mit seitenständigen Epoxidgruppen. Beispiele geeigneter Oligomere oder Polymere entstammen den vorstehend genannten Polymerklassen. Besonders bevorzugt werden Poly(meth)acrylate mit seitenständigen Epoxidgruppen verwendet. Die Verbindungen (C4) können vorteilhafterweise in Mengen von 0,1 bis 15, bevorzugt 0,5 bis 10, besonders bevorzugt 0,8 bis 5 und insbesondere 1 bis 2 Gew.-%, bezogen auf den Festkörpergehalt des Beschichtungsstoffs (C), angewandt werden.

Darüber hinaus kann der Beschichtungsstoff (C) übliche und bekannte Lösemittel (C5) und/oder Additive (C6) enthalten.

Beispiele geeigneter Lösemittel (C5) sind Ester wie Butylacetat oder Methyloctoatisomere (Exxate®) oder aromatische Lösemittelgemische wie Solvesso®.

Beispiele geeigneter Additive (C6) sind UV-Absorber; Radikalfänger; Rheologiemittel; Kieselsäuren; reaktive und inerte Nanonpartikel wie sie beispielsweise in der Patentschrift EP-A-0 832 947 beschrieben werden; kolloidale Metallhydroxide, welche blockierte Isocyanatgruppen aufweisen, wie sie beispielsweise in der Patentschrift EP-A-0 872 500 beschrieben werden; Slipadditive; Polymerisationsinhibitoren; Entschäumer; Verlaufmittel oder filmbildende Hilfsmittel wie Cellulose-Derivate. Wesentlich ist, daß diese Additive (C6) die Transparenz und anderen besonderen vorteilhaften Eigenschaften der Klarlackschicht (C) nicht nachteilig beeinflussen, sondern in vorteilhafter Weise variieren und verbessern. Weitere Beispiele geeigneter Additive (C6) gehen aus der Patentschrift US-A-5,605,695 hervor.

Die Zusammensetzung der erfindungsgemäß zu verwendenden Beschichtungsstoffe (C), d. h. das mengenmäßige Verhältnis ihrer Komponenten, kann breit variieren und richtet sich nach dem Eigenschaftsprofil der Klarlackschicht (C) und seiner Abstimmung auf das Eigenschaftsprofil der Klarlackschicht (B). Der Fachmann kann geeignete Zusammensetzungen aufgrund seines Fachwissens gegebenenfalls unter Zuhilfenahme einfacher Vorversuche ermitteln, wobei ihm der Stand der Technik als Richtschnur dienen kann. Im allgemeinen empfiehlt es sich, die in den Patentschriften US-A-5,474,811, US-A-5,356,669, US-A-5,605,965, WO 94/10211, WO 94/10212, WO 94/10213, EP-A-0 594 068, EP-A-0 594 071 oder EP-A-0 594 142 offenbarten Mengenverhältnisse zu wählen.

Die Herstellung des Beschichtungsstoffs (C) aus seinen Komponenten weist keine Besonderheiten auf, sondern erfolgt in üblicher und bekannter Weise durch Vermischen der Bestandteile in geeigneten Mischaggregaten wie Dissolvern.

Der zweite wesentliche Bestandteil der erfindungsgemäßen Mehrschichtlackierung ist die erste Klarlackschicht (B).

Erfindungsgemäß kommen für deren Herstellung sämtliche Beschichtungsstoffe (B) in Betracht, welche nach dem Naß-in-naß-Verfahren auf Basislacke (A), insbesondere Wasserbasislacke (A), appliziert werden können.

Die erste wesentliche Komponente des Beschichtungsstoffs (B) ist mindestens ein Bindemittel (B1).

Beispiele geeigneter Bindemittel (B1) entstammen den vorstehend genannten Polymerklassen und werden beispielsweise in den Patentschriften EP-A- 0 832 947, EP-A-0 604 992, WO 94/22969, EP-A-0 596 460, WO 92/22615, DE-A- 42 22 194, DE-A-196 13 547, EP-A- 0 540 884, EP-A- 0 568 967 oder US-A-4,675,234 beschrieben.

Wenn die Beschichtungsstoffe (B) zusätzlich oder alleine mit aktinischer Strahlung, insbesondere UV-Strahlung und/oder Elektronenstrahlung, härtbar sein sollen, enthalten sie Bindemittel (B1), welche mit aktinischer Strahlung, härtbar sind.

Als Bindemittel (B1) dieser Art kommen grundsätzlich alle mit aktinischer Strahlung, insbesondere UV-Strahlung und/oder Elektronenstrahlung, härtbaren, oligomeren und polymeren Verbindungen in Betracht, wie sie üblicherweise auf dem Gebiet der UV-härtbaren oder mit Elektronenstrahlung härtbaren Beschichtungsstoffe verwendet werden. Diese strahlenhärtbaren Beschichtungsstoffe enthalten üblicherweise mindestens ein, bevorzugt mehrere strahlenhärtbare Bindemittel (B1), insbesondere auf Basis ethylenisch ungesättigter Präpolymerer und/oder ethylenisch ungesättigter Oligomerer.

Beispiele geeigneter strahlenhärtbarer Bindemittel (B1) sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate. Bevorzugt werden Bindemittel (B1) eingesetzt, die frei von aromatischen Struktureinheiten sind. Bevorzugt werden daher Urethan(meth)acrylate und/oder Polyester(meth)acrylate, besonders bevorzugt aliphatische Urethanacrylate, eingesetzt.

Die Bindemittel (B1) enthalten funktionelle Gruppen (b11), welche mit den funktionellen Gruppen (b21) der Vernetzungsmittel (B2) Vernetzungsreaktionen eingehen (Prinzip der komplementären Gruppen).

Beispiele geeigneter funktioneller Gruppen (b11) sind Thio-, Amino-, Hydroxy-, Carboxy-, Epoxy- oder (Meth)acrylatgruppen.

Die zweite wesentliche Komponente des Beschichtungsstoffs (B) ist mindestens ein Vernetzungsmittel. Dieses enthält funktionelle Gruppen (b21), welche mit den funktionellen Gruppen (b11) der Bindemittel (B1) Vernetzungsreaktionen eingehen (Prinzip der komplementären Gruppen).

Beispiele geeigneter funktioneller Gruppen (b21) sind Anhydrid-, Carboxy-, Epoxy-, Isocyanat-, blockierte Isocyanat-, Urethan-, Methylol-, Methylolether-, Siloxan-, Amino-, Hydroxy- oder beta-Hyclroxyalkylamidgruppen oder mit aktinischer Strahlung vernetzbare ethylenisch ungesättigte Gruppen.

Beispiele geeigneter erfindungsgemäß zu verwendender komplementärer reaktiver funktioneller Gruppen (b 11) und (b21), welche Vernetzungsreaktionen eingehen, sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R¹ und R² stehen für gleiche oder verschiedene aliphatischen Reste oder sind mit einander zu einem aliphatischen oder heteroaliphatischen Ring verknüpft.

| **Übersicht: Beispiele komplementärer funktioneller Gruppen (b11) und (b21) in** | |
|---|---|
| **Bindemittel (B1) und Vernetzungsmittel (B2)** **oder** **Vernetzungsmittel (B2) und Bindemittel (B1)** | |
| -SH | -C(O)-OH |
| -NH₂ | -C(O)-O-C(O)- |
| -OH | -NCO |
| | -NH-C(O)-OR |
| | -CH₂-OH |
| | -CH₂-O-CH₃ |
| | -NH-C(O)-CH(-C(O)OR)₂ |
| | -NH-C(O)-CH(-C(O)OR)(-C(O)-R) |
| | -NH-C(O)-NR¹R² = Si(OR)₂ |
| | O |
| | -CH-CH₂ |
| -C(O)-OH | O |
| | -CH-CH₂ |
| -O-C(O)-CR=CH2 | -OH |
| -O-CR=CH₂ | -NH₂ |
| | -C(O)-CH₂-C(O)-R |
| | -CH=CH₂ |

Beispiele geeigneter Vernetzungsmittel (B2) sind die vorstehend genannten Vernetzungsmittel (C2). Diese Vernetzungsmittel (B2) werden vor allem in Einkomponenten (1K)-Klarlacken angewandt.

Weitere Beispiele geeigneter Vernetzungsmittel (B2) für diesen Verwendungszweck sind Polyepoxide (b21), insbesondere alle bekannten aliphatischen und/oder cycloaliphatischen und/oder aromatischen Polyepoxide, beispielsweise auf Basis Bisphenol-A oder Bisphenol-F. Als Polyepoxide (B2) geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether).

Weitere Beispiele geeigneter Vernetzungsmittel (B2) für diesen Verwendungszweck sind Tris(alkoxycarbonylamino)triazine der Formel: in

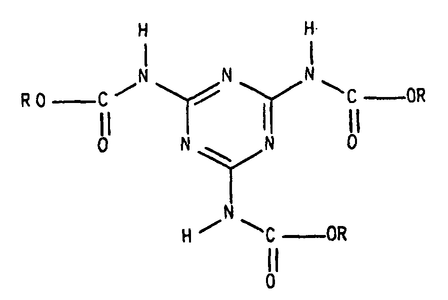

Beispiele geeigneter Tris(alkoxycarbonylamino)triazine (b21) werden in den Patentschriften US-A-4,939,213, US-A-5,084,541 oder der EP-A-0 624 577 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Weitere Beispiele geeigneter Vernetzungsmittel (B1) für diesen Verwendungszweck sind die nachstehend beschriebenen Polyisocyanate (B2), deren freien Isocyanatgruppen mit geeigneten Blockierungsmitteln blockiert sind.

Beispiele geeigneter Blockierungsmittel sind die aus der US-Patentschrift US-A-4,444,954 bekannten Blockierungsmittel:
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ü) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharastoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Ketoxime, Imidazole oder Triazole; sowie
xvii) Gemische dieser Blockierungsmittel, insbesondere Dimethylpyrazol und Triazole, Malonester und Acetessigsäureester oder Dimethylpyrazol und Succinimid.

Wird der Beschichtungsstoff (B) als Zweikomponenten(2K)- oder Mehrkomponenten(3K, 4K)-Klarlack ausgelegt, können Vernetzungsmittel (B2) von höherer Reaktivität verwendet werden, welche bereits unter 100 °C, vorzugsweise unters 80 °C, Vernetzungsreaktionen eingehen können. Beschichtungsstoffe (B) dieser Art wird man dann wählen, wenn die Substrate durch hohe Einbrenntemperaturen nicht belastet werden dürfen und/oder wenn aufgrund der physikalischen Vernetzung des Basislacks (A) grundsätzlich keine hohen Einbrenntemperaturen notwendig sind.

Beispiele geeigneter reaktiver Vernetzungsmittel (B2) sind die vorstehend beschriebenen Polyepoxide.

Weitere Beispiele geeigneter reaktiver Vernetzungsmittel (B2) sind organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate (B2) mit 2 bis 5 Isocyanatgruppen pro Molekül und mit Viskositäten von 100 bis 10.000, vorzugsweise 100 bis 5000 und - sofern das manuelle Vermischen der Komponenten vorgesehen ist - insbesondere 500 bis 2000 mPas (bei 23°C) eingesetzt. Gegebenenfalls können den Polyisocyanaten (B2) noch geringe Mengen organisches Lösemittel, bevorzugt 1 bis 25 Gew.-%, bezogen auf reines Polyisocyanat, zugegeben werden, um so die Einarbeitbarkeit des Polyisocyanats (B2) zu verbessern und gegebenenfalls seine Viskosität auf einen Wert innerhalb der obengenannten Bereiche abzusenken. Als Zusatzmittel geeignete Lösemittel für die Polyisocyanate (B2) sind beispielsweise Ethoxyethylpropionat, Amylmethylketon oder Butylacetat. Außerdem können die Polyisocyanate (B2) in üblicher und bekannter Weise hydrophil oder hydrophob modifiziert sein.

Beispiele für geeignete Polysocyanate (B2) sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben. Beispielsweise geeignet sind die isocyanatgruppenhaltigen Polyurethanpräpolymere (B2), die durch Reaktion von Polyolen mit einem Überschuß an Polyisocyanaten hergestellt werden können und die bevorzugt niederviskos sind.

Weitere Beispiele geeigneter Polyisocyanate (b21) sind Isocyanurat-, Biuret-, Allophanat-, Iminooxadiazindon-, Urethan-, Harnstoff- und/oder Uretdiongruppen aufweisende Polyisocyanate. Urethangruppen aufweisende Polyisocyanate (B2) werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate (b21), insbesondere Hexamethylendiisocyanat, dimerisiertes und trimerisiertes Hexamethylendüsocyanat, Isophorondiisocyanat. Dicyclohexylmethan-2,4'-diisocyanat, Dicyclohexylmethan-4,4'-diisocyanat, Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan; oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan, 1,8-Diisocyanato-4-isocyanatomethyl-octan, 1,7-Diisocyanato-4-isocyanatomethyl-heptan oder 1-Isocyanato-2-(3-isocyanatopropyl)cyclohexan oder Mischungen aus diesen Polyisocyanaten (B2) eingesetzt.

Ganz besonders bevorzugt werden Gemische aus Uretdion- und/oder Isocyanuratgruppen und/oder Allophanatgruppen aufweisenden Polyisocyanaten (B2) auf Basis von Hexamethylendiisocyanat, wie sie durch katalytische Oligomerisierung von Hexamethylendiisocyanat unter Verwendung von geeigneten Katalysatoren entstehen, eingesetzt.

Darüber hinaus kann der Beschichtungsstoff (B) übliche und bekannte Lösemittel (B3) enthalten. Beispiele geeigneter Lösemittel (B3) sind die vorstehend beschriebenen Lösemittel (C5).

Des weiteren kann der Beschichtungsstoff (B) übliche und bekannte Additive (B4) in wirksamen Mengen enthalten. Beispiele geeigneter Additive (B4) sind die vorstehend beschriebenen Additive (C6). Ist der Beschichtungsstoff (B) mit aktinischer Strahlung härtbar, kann er außerdem noch übliche und bekannte Photoinitiatoren als Additive (B4) enthalten.

Der Beschichtungsstoff (B) kann als lösemittelhaltiger Spritzlack vorliegen.

Der Beschichtungsstoff (B) kann indes auch ein Pulverklarlack sein. Zu diesem Zweck werden die Komponenten (B1) und (B2) sowie gegebenenfalls (B3) und (B4) so ausgewählt, daß der resultierende Pulverklartack (B) fest ist und vor der Aushärtung verfilmt.

Der Beschichtungsstoff (B) kann indes auch ein Pulverslurry-Klarlack sein. Zu diesem Zweck müssen die Komponenten die vorstehend genannten Bedingungen erfüllen. Zusätzlich müssen sie so ausgewählt werden, daß die Pulverslurry-Teilchen in Wasser stabil dispergierbar sind.

Die Zusammensetzung der erfindungsgemäß zu verwendenden Beschichtungsstoffe (B), d. h. das mengenmäßige Verhältnis ihrer Komponenten, kann breit variieren und richtet sich nach dem Eigenschaftsprofil der Klarlackschicht (B) und seiner Abstimmung auf das Eigenschaftsprofil der Klarlackschicht (C). Der Fachmann kann geeignete Zusammensetzungen aufgrund seines Fachwissens gegebenenfalls unter Zuhilfenahme einfacher Vorversuche ermitteln, wobei ihm der eingangs genannte Stand der Technik als Richtschnur dienen kann.

Die Herstellung des Beschichtungsstoffs (B) aus seinen Komponenten weist keine Besonderheiten auf, sondern erfolgt in üblicher und bekannter Weise durch Vermischen der Bestandteile in geeigneten Mischaggregaten. Im Falle von Spritzlacken (B) werden hierzu beispielsweise Dissolver, im Falle von Pulverklarlacken oder Pulverslurry-Klarlacken (B) Extruder und Mühlen angewandt.

Der dritte wesentliche Bestandteil der erfindungsgemäßen Mehrschichtlackierung ist die Basislackschicht (A).

Die Basislackschicht (A) ist herstellbar aus einem Beschichtungsstoff (A), vorzugsweise einem wäßrigen Beschichtungsstoff (A), insbesondere einem Wasserbasislack (A), und ist der farb- und/oder effektgebende Bestandteil der erfindungsgemäßen Mehrschichtlackierung.

Der erfindungsgemäß besonders bevorzugt verwendete Wasserbasislack (A) enthält bekanntermaßen die folgenden wesentlichen Komponenten in Wasser dispergiert:
(A1) mindestens ein anionisch und/oder nicht ionisch stabilisiertes Polyurethan und
(A2) mindestens ein farb- und/oder effektgebendes Pigment.

Beispiele geeigneter farb- und/oder effektgebender Pigmente (A2) sind Metallplättchenpigmente wie handelsübliche Aluminiumbronzen, gemäß DE-A-36 36 183 chromatierte Aluminiumbronzen, und handelsübliche Edelstahlbronzen sowie nicht metallische Effektpigmente, wie zum Beispiel Perlglanz- bzw. Interferenzpigmente. Beispiele für geeignete anorganische farbgebende Pigmente (A2) sind Titandioxid, Eisenoxide, Sicotransgelb und Ruß. Beispiele für geeignete organische farbgebende Pigmente (A2) sind Indanthrenblau, Cromophthalrot, Irgazinorange und Heliogengrün.

Desweiteren kann der erfindungsgemäße Beschichtungsstoff organische und anorganische Füllstoffe (A3) in üblichen und bekannten, wirksamen Mengen enthalten. Beispiele für geeignete Füllstoffe sind Kreide, Calciumsulfate, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Holzmehl.

Der erfindungsgemäße Beschichtungsstoff enthält des weiteren Lackadditive (A4) in üblichen und bekannten, wirksamen Mengen.

Beispiele geeigneter Additive (A4) sind UV-Absorber; Radikalfänger; Katalysatoren für die Vernetzung, insbesondere metallorganische Verbindungen, vorzugsweise Zinn und/oder wismutorganische Verbindungen oder tertiäre Amine; reaktive und inerte Nanonpartikel wie sie beispielsweise in der Patentschrift EP-A-0 832 947 beschrieben werden; kolloidale Metallhydroxide, welche blockierte Isocyanatgruppen aufweisen, wie sie beispielsweise in der Patentschrift EP-A-0 872 500 beschrieben werden; Slipadditive; Polymerisationsinhibitoren; Entschäumer; Haftvermittler; Verlaufmittel oder filmbildende Hilfsmittel, z.B. Cellulose-Derivate.

Insbesondere kann als Additive (A4) mindestens ein rheologiesteuerndes Additiv verwendet werden. Beispiele geeigneter rheologiesteuemder Additive (A4) sind die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate. Bevorzugt werden als rheologiesteuemde Additive (A4) Polyurethane und/oder Schichtsilikate eingesetzt.

Außerdem kann der Wasserbasislack (A), wenn er nicht nur durch physikalische Trocknung ausgehärtet werden soll, mindestens ein Vernetzungsmittel (A5) in wirksamen Mengen enthalten.

Beispiele geeigneter Vernetzungsmittel (A5) sind die vorstehend beschriebenen Vernetzungsmittel (B2), welche für die Verwendung in Einkomponenten(1K)-Klarlacken geeignet sind. Wird der Wasserbasislack (A) als ein Zweikomponenten(2K)- oder Mehrkomponenten(3K, 4K)-Klarlack ausgelegt, enthält er die vorstehend beschriebenen reaktiven Vernetzungsmittel (B2).

Zahlreiche Beispiele geeigneter anionisch und/oder nicht ionisch stabilisierter Polyurethane sowie zahlreiche Beispiele geeigneter Zusammensetzungen von Wasserbasislacken (A) gehen aus den Patentschriften EP-A-0 089 497, EP-A-0 256 540, EP-A-0 260 447, EP-A-0 297 576, WO 96/12747, EP-A-0 523 610, EP-A-0 228 003, EP-A-0 397 806, EP-A-0 574 417, EP-A-0 531 510, EP-A-0 581 211, EP-A-0 708 788, EP-A-0 593 454, DE-A-43 28 092, EP-A-0 299 148, EP-A-0 394 737, EP-A-0 590 484, EP-A-0 234 362; EP-A-0 234 361, EP-A-0 543 817, WO 95/14721, EP-A-0 521 928, EP-A-0 522 420, EP-A-0 522 419, EP-A-0 649 865, EP-A-0 536 712, EP-A-0 596 460, EP-A-0 596 461, EP-A-0 584 818, EP-A- 0 669 356, EP-A-0 634 431, EP-A-0 678 536, EP-A-0 354 261, EP-A-0 424 705, WO 97/49745, WO 97/49747 oder EP-A-0 401 565 hervor.

Methodisch gesehen weist die Herstellung der Wasserbasislacke (A) keine Besonderheiten auf, sondern erfolgt nach den üblichen und bekannten Methoden durch Vermischen der Komponenten in geeigneten Mischaggregaten wie Dissolvern.

Die erfindungsgemäße Mehrschichtlackierung kann nach den unterschiedlichsten Verfahren hergestellt werden. Von Vorteil ist es, sie nach dem erfindungsgemäßen Verfahren herzustellen.

Das erfindungsgemäße Verfahren geht aus von dem zu beschichtenden Substrat. Das Substrat kann aus Metall, Holz, Kunststoff, Glas oder Papier bestehen oder diese Stoffe als Verbunde enthalten. Vorzugsweise handelt es sich um Automobilkarosserieteile, industrielle Bauteile oder Container aus Metall.

Das Substrat kann mit einer Grundierung versehen sein. Im Falle von Kunststoffen handelt es sich um eine sogenannte Hydrogrundierung, welche vor der Applikation des Basislacks (A), insbesondere des Wasserbasislacks (A), ausgehärtet wird. Im Falle von Metallen, insbesondere Automobilkarosserieteilen, handelt es sich um übliche und bekannte ausgehärtete Elektrotauchlacke, auf die ein Füller appliziert und eingebrannt wird.

In erfindungsgemäßer Verfahrensweise wird der Basislack (A) in einem Verfahrensschritt (I) auf die Oberfläche des Substrats aufgebracht und zwischengetrocknet (Verfahrensschritt II), indes nicht ausgehärtet.

In einem Verfahrensschritt (III) wird auf die Oberfläche der Basislackschicht (A) ein erster Klarlack (B) aufgetragen, welcher später die Zwischenschicht bildet.

Im Verfahrensschritt (IV) werden die Schichten (A) und (B) gemeinsam ausgehärtet ( Naß-in-naß-Verfahren). Hierbei kann die Schicht (B) je nach ihrer Zusammensetzung thermisch und/oder mit aktinischer Strahlung ausgehärtet werden. Was die thermische Härtung betrifft, richtet sich die Einbrenntemperatur vor allem danach, ob die Beschichtungsstoffe (A) und (B) Einkomponenten(1K)- oder Zweikomponenten(2K)- oder Mehrkomponenten(3K, 4K)-Systeme sind. Im Falle von Einkomponenten(1K)-Systemen werden im allgemeinen Einbrenntemperaturen oberhalb 120 °C angewandt. Im Falle von Zweikomponenten(2K)- oder Mehrkomponenten(3K, 4K)-Systemen liegen die Einbrenntemperaturen üblicherweise unter 100 °C, insbesondere unter 80 °C.

Erfindungsgemäß wird auf die Oberfläche der Klarlackschicht (B) im Verfahrensschritt (V) die stoffliche hiervon verschiedene Klarlackschicht (C) appliziert und im Verfahrensschritt (VI) ausgehärtet. Üblicherweise werden hierbei Einbrenntemperaturen von 120 bis 150°C angewandt.

Erfindungsgemäß kann aber die zweite Klarlackschicht (C) auch naß-in-naß aufgetragen werden, um dann mit der ersten Klarlackschicht (B) und der Basislackschicht (A) eingebrannt zu werden.

Bei dem erfindungsgemäßen Verfahren können die Beschichtungsstoffe (A), (B) und (C) durch übliche Applikationsmethoden, wie z.B. Spritzen, Rakeln, Streichen, Gießen, Tauchen oder Walzen auf die Substrate aufgebracht werden. Für die Aushärtung der einzelnen Schichten können die üblichen und bekannten Methoden wie Erhitzen in einem Umluftofen, Bestrahlen mit IR-Lampen sowie gegebenenfalls mit UV-Lampen angewandt werden.

Innerhalb der erfindungsgemäßen Mehrschichtlackierung kann die Dicke der einzelnen Schichten (A), (B) und (C) breit variieren. Erfindungsgemäß ist es indes von Vorteil, wenn die Basislackschicht (A) eine Dicke von 5 bis 25 µm, insbesondere 7 bis 15µm, und die beiden Klarlackschichten (B) und (C) insgesamt eine Dicke von 15 bis 120 µm, vorzugsweise 40 bis 80 µm und insbesondere 60 bis 70 µm aufweisen. Hierbei kann das Verhältnis der Schichtdicken breit variieren, indes ist es auch aus wirtschaftlichen Gründen von Vorteil, wenn die Klarlackschicht (B) die dickere der beiden Schichten ist.

Die erfindungsgemäße Mehrschichtlackierung weist hervorragende optische, mechanische und chemische Eigenschaften auf. So ist sie frei von jeglichen Oberflächenstörungen wie Schrumpf (wrinkling). Sie ist von hervorragender Transparenz und Kratzfestigkeit. Delamination wegen mangelhafter Zwischenschichthaftung ist nicht zu beobachten. Die Etchbeständigkeit ist hervorragend. Somit eignet sich der erfindungsgemäß zu verwendende Beschichtungsstoff (C) in hervorragender Weise dazu, sämtliche herkömmlichen Klarlackierungen zu veredeln, ohne daß beim Kunden größere Umstellungen der Lackieranlagen notwendig werden. Dies stellt einen weiteren besonderen Vorteil der erfindungsgemäßen Mehrschichtlackierungen dar.

### Beispiele

### Herstellbeispiel 1

### Die Herstellung eines Vernetzungsmittels

In einem 41-Edelstahlreaktor mit Rührer, Rückflußkühler, Thermometer, Ölheizung und einem Zulaufgefäß für das Blockierungsmittel wurden 41,76 Gewichtsteile Vestanat^{R} 1890 (Isocyanurat auf der Basis von Isophorondiisocyanat der Firma Creanova) und 20,76 Gewichtsteile Solventnaphtha eingewogen und auf 50 °C erhitzt. Innerhalb von vier Stunden wurden 23,49 Gewichtsteile Diethylmalonat, 5,81 Gewichtsteile Acetessigsäureethylester und 0,14 Gewichtsteile Katalysatorlösung (Natriumethylhexanoat) gleichmäßige zudosiert. Nach Beendigung des Zulaufs wurden nochmals 0,14 Gewichtsteile Katalysatorlösung hinzugegeben. Im Anschluß daran wurde die Temperatur auf 80 °C erhöht. Bei Erreichen eines Isocyanat-Äquivalentgewichts von 5900 bis 6800 wurden 0,9 Gewichtsteile 1,4-Cyclohexyldimethanol während 30 Minuten bei 80 °C unter Rühren zugegeben. Nach Erreichen eines Isocyanat-Äquivalentgewichts von ≥ 13.000 wurden 5 Gewichtsteile n-Butanol zugegeben. Die Temperatur wurde dabei auf 50 °C gesenkt, und das resultierende blockierte Polyisocyanat wurde mit 2 Gewichtsteilen n-Butanol auf einen theoretischen Festkörpergehalte von 68 Gew.-% angelöst. Das so erhaltene blockierte Polyisocyanat wies einen Festkörpergehalt von 74,5 Gew.-% (eine Stunde; 130°C) und eine Original-Viskosität von 41,6 dPas auf.

### Herstellbeispiel 2

### Die Herstellung eines Polyacrylats

In einem Laborreaktor mit einem Nutzvolumen von 4 1, ausgestattet mit einem Rührer, zwei Tropftrichtern für die Monomermischung resp. Initiatorlösung, Stickstoffeinleitungsrohr, Thermometer und Rückflußkühler, wurden 720 g einer Fraktion aromatischer Kohlenwasserstoffe mit einem Siedebereich von 158 - 172°C eingewogen. Das Lösemittel wurde auf 140 °C aufgeheizt. Nach Erreichen von 140 °C wurden eine Monomermischung aus, 427,5 g n-Butylacrylat, 180 g n-Butylmethacrylat, 450 g Styrol, 255 g Hydroxyethylacrylat, 165 g 4-Hydroxybutylacrylat und 22,5 g Acrylsäure innerhalb von 4 Stunden und eine Initiatorlösung von 120 g t-Butylperethylhexanoat in 90 g des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden auf 140 °C gehalten und danach abgekühlt. Die resultierende Polymerlösung hatte einen Feststoffgehalt von 60%, bestimmt in einem Umluftofen 1 h bei 130 °C, eine Säurezahl von 13 mg KOH/g, eine OH-Zahl von 116 mg KOH/g, eine Glasübergangstemperatur Tg von 3,23 °C und eine Viskosität von 9 dPas (gemessen an der 60%igen Polymerlösung in dem beschriebenen aromatischen Lösemittel unter Verwendung eines ICI Platte-Kegel Viskosimeters bei 23 °C).

### Beispiel 1

### Die Herstellung eines erfindungsgemäßen Einkomponentenklarlacks

Ein erfindungsgemäßer Einkomponentenklarlack wurde aus den in der Tabelle 1 aufgeführten Bestandteilen durch Vermischen hergestellt.

**Tabelle 1:**

| **Zusammensetzung des erfindungsgemäßen Einkomponenten. klarlacks** | |
|---|---|
| **Bestandteile** | **Beispiel 1** **(Gew.-Teile)** |
| Polyacrylat gemäß Herstellbeispiel 2 | 43,4 |
| | |
| Vernetzungsmittel | 9,0 |
| | 33 |
| | |
| gemäß Herstellbeispiel 1 | |
| | |
| Handelsübliches Butanol-verethertes Melamin-Formaldehyd-Harz (60%-ig in Butanol/Xylol) | 16,0 |
| | |
| Setalux® C91756 (handelsübliches Thixotropierungsmittel der Firma Akzo) | 13,5 |
| | |
| Substituiertes Hydroxyphenyltriazin (65 %ig in Xylol) (Cyagard® 1164 L) | 0,6 |
| | |
| Aminoethermodifizierter -2,2,6,6-Tetramethylpiperydinylester (Tinuvin® 123 der Firma Ciba) | 0,8 |
| | |
| Byk® 390 (Byk Chemie) | 0,05 |
| | |
| Byk® 310 (Byk Chemie) | 0,15 |
| | |
| Tego® LAG 502 | 0,2 |
| | |
| Butanol | 11,4 |
| Solvenmaphtha® | 2,5 |
| Xylol | 0,9 |
| Butyldiglykolacetat | 1,5 |
| | |
| **SUMME** | **100** |

Der Klarlack des Beispiels 1 wies im DIN 4-Becher bei 21 °C eine Auslaufzeit von 46 s auf. Für die Applikation wurde er mit 8 Gewichtsteilen eines Verdünners (organisches Lösemittelgemisch) auf eine Auslaufzeit von 28 s eingestellt.

### Beispiel 2

### Die Herstellung einer erfindungsgemäßen Mehrschichtlackierung ML

Zur Herstellung der Prüftafeln wurden nacheinander ein Elektmtauchlack (Trockenschichtdicke 22 µm) und ein Wasserfüller (FU63-9400 der Firma BASF Coatings AG) appliziert und eingebrannt (Trockenschichtdicke 30 µm). Hierbei wurde der Elektrotauchlack während 20 Minuten bei 170°C und der Füller während 20 Minuten bei 160°C eingebrannt. Anschließend wurde ein blauer Wasserbasislack (Wasser-Percolor-Basislack FW 05-513P der Firma BASF Coatings AG mit einer Schichtdicke von 15 - 18 µm aufgetragen und 10 Minuten bei 80°C abgelüftet.

Anschließend wurden für das Beispiel 2 der Einkomponentenklarlack des Beispiels 1 (vgl. Tabelle 1) naß-in-naß appliziert und während 30 Minuten bei 135 °C eingebrannt, so daß Trockenschichtdicken von 35 µm resultierten.

Die so erhaltenen Prüftafeln wurden ohne Zwischenschliff mit dem Überzugsklarlack URECLEAR® der Firma BASF Coatings AG (Spritzviskosität 25 s im DIN 4-Auslaufbecher bei 22°C) überschichtet. Die resultierenden Klarlackschichten wurden während 20 Minuten bei 140°C eingebrannt, so daß Trockenschichtdicken von 20 µm resultierten.

Die Haftung der erfindungsgemäßen Mehrschichtlackierung ML des Beispiels 2 wurde nach 24 Stunden Lagerung bei Raumtemperatur nach dem Gitterschnittest nach DIN 53151 (2 mm) [Note 0 bis 5] ermittelt. Es erfolgte keine Enthaftung: Note GTO.

Des weiteren wurden die Haftungseigenschaften der erfindungsgemäßen Mehrschichtlackierung ML des Beispiels 2 mit Hilfe des Gitterschnittests nach Belastung mit Kondenswasser ermittelt. Die Ergebnisse finden sich in der Tabelle 2. Sie untermauern erneut die Haftfestigkeit der erfindungsgemäßen Mehrschichtlackierung ML.

**Tabelle 2:**

| **Kondenswasser-Konstantklimatest (KK-Test)**^{**a**}**) und Haftungseigenschaften der erfindungsgemäßen Mehrschichtlackierung ML** | |
|---|---|
| | **Beispiel 2** |
| Haftung nach dem Gitterschnittest ^{b)} | GT1 |

| | |
|---|---|
| a) übliches Verfahren zur Bewertung der Beständigkeit von Lackmaterialien gegenüber einer Belastung mit Dauerfeuchte (240 Stunden, 100% reL Feuchte, 40°C, Details in der von der BASF Coatings AG erhältlichen Prüfvorschrift MKK0001A, Ausgabe A/14.05.1996). Die Auswertung erfolgt eine Stunde nach Abschluß der Schwitzwasserbelastung. | |
| b) Gitterschnitt nach DIN 53151 (2 mm) nach 240 Stunden SKK und 24 Stunden Regeneration; Note 0 bis 5: 0 = bester Wert; 5 = schlechtester Wert | |

Die Kratzfestigkeit der erfindungsgemäßen Mehrschichtlackierung ML auf den Prüftafeln wurde mit Hilfe des in Fig. 2 auf Seite 28 des Artikels von P. Betz und A. Bartelt, Progress in Organic Coatings, 22 (1993), Seiten 27 - 37, beschriebenen BASF-Bürstentests, der allerdings bezüglich des verwendeten Gewichts (2000 g statt der dort genannten 280 g) abgewandelt wurde, folgendermaßen beurteilt:

Bei dem Test wurde die Lackoberfläche mit einem Siebgewebe, welches mit einer Masse belastet wurde, geschädigt. Das Siebgewebe und die Lackoberfläche wurden mit einer Waschmittel-Lösung reichlich benetzt. Die Prüftafel wurde mittels eines Motorantriebs in Hubbewegungen unter dem Siebgewebe vor- und zurückgeschoben.

Der Prüfkörper war mit Nylon-Siebgewebe (Nr. 11, 31 µm Maschenweite, Tg 50 °C) bespanntes Radiergummi (4,5 x 2,0 cm, breite Seite senkrecht zur Kratzrichtung). Das Auflagegewicht betrugt 2000 g.

Vor jeder Prüfung wurde das Siebgewebe erneuert, dabei war die Laufrichtung der Gewebemaschen parallel zur Kratzrichtung. Mit einer Pipette wurde ca. 1 ml einer frisch aufgerührten 0,25%igen Persil-Lösung vor dem Radiergummi aufgebracht. Die Umdrehungszahl des Motors wurde so eingestellt, daß in einer Zeit von 80 s 80 Doppelhübe ausgeführt wurden. Nach der Prüfung wurde die verbleibende Waschflüssigkeit mit kaltem Leitungswasser abgespült und die Prüftafel mit Druckluft trockengeblasen. Gemessen wurde der Glanz (20°) nach DIN 67530 vor und nach Beschädigung (Meßrichtung senkrecht zur Kratzrichtung).

Vor der Beschädigung wiesen die Prüftafeln ein Glanz von 83,7 auf, der durch die Beschädigung lediglich um dGlanz 10,1 abnahm. Nach einer Zeit von 2 Stunden bei 40°C betrug der dGlanz nur noch 7,0, nach einer Zeit von 2 Stunden bei 60°C nur noch 6,0. Dies untermauert die hervorragende Kratzfestigkeit und das sehr gute Reflow-Verhalten der erfindungsgemäßen Mehrschichttackierung.

Zusätzlich wurde die Kratzfestigkeit nach dem Sandtest bestimmt. Hierzu wurden die Lackoberfläche mit Sand belastet (20g Quarz-Silbersand 1,5-2,0 mm). Der Sand wurde in einen Becher (Boden plan abgeschnitten) gegeben, der fest auf der Prüftafel befestigt wurde. Es wurden die gleichen Prüftafeln wie oben im Bürstentest beschrieben verwendet. Mittels eines Motorantriebes wurde die Tafel mit dem Becher und dem Sand in Schüttelbewegungen versetzt. Die Bewegung des losen Sandes verursachte dabei die Beschädigung der Lackoberfläche (100 Doppelhübe in 20 s). Nach der Sandbelastung wurde die Prüffläche vom Abrieb gereinigt, unter einem kalten Wasserstrahl vorsichtig abgewischt und anschließend mit Druckluft getrocknet. Gemessen wurde der Glanz nach DIN 67530 vor und nach Beschädigung.

Vor der Beschädigung wiesen die Prüftafeln ein Glanz von 83,7 auf, der durch die Beschädigung lediglich um dGlanz 19,1 abnahm. Nach einer Zeit von 2 Stunden bei 40°C betrug der dGlanz nur noch 17,8, nach einer Zeit von 2 Stunden bei 60°C nur noch 15,9. Dies untermauert erneut die hervorragende Kratzfestigkeit und das sehr gute Reflow-Verhalten der erfindungsgemäßen Mehrschichtlackierung.

Die Chemikalienbeständigkeit nach wurde nach dem BART (BASF ACID RESISTANCE TEST) bestimmt. Er diente der Ermittlung der Beständigkeit von Lackoberflächen gegen Säuren, Laugen und Wassertropfen. Dabei wurde die Mehrschichtlackierung ML auf einem Gradientenofen nach der Einbrennung weiteren Temperaturbelastungen ausgesetzt (30 min 40°C, 50°C, 60°C und 70°C). Zuvor wurden die Testsubstanzen (Schwefelsäure 1%ig, 10%ig, 36%ig; schweflige Säure 6%ig; Salzsäure 10%ig; Natronlauge 5%ig, VE (= vollentsalztes) Wasser - je 1,2,3 bzw. 4 Tropfen) definiert mit einer Dosierpipette aufgebracht. Im Anschluß an die Einwirkung der Substanzen wurden diese unter fließendem Wasser entfernt und die Beschädigungen nach 24 h entsprechend einer vorgegebenen Skala visuell beurteilt:

| Benotung | Aussehen |
|---|---|
| 0 | kein Defekt |
| 1 | leichte Markierung |
| 2 | Markierung / Vermattung / keine Erweichung |
| 3 | Markierung / Vermattung / Farbtonveränderung / Erweichung |
| 4 | Risse / beginnende Durchätzung |
| 5 | Klarlack entfernt |

Es wurde jede einzelne Markierung (Spot) ausgewertet und das Ergebnis in einer Notensumme für eine Temperatur festgehalten. Es resultierten die folgenden Werte: Summe 40°C: 0; Summe 50°C: 3; Summe 60°C: 7; und Summe 70°C: 19. Die Werte belegen die hohe Chemikalienbeständigkeit der erfindungsgemäßen Mehrschichtlackierung ML.

## Patentansprüche

1. Hochkratzfeste Mehrschichtlackierung auf einem gegebenenfalls grundierten Substrat, enthaltend in dieser Reihenfolge übereinander liegend
(A) eine Basislackschicht,
(B) eine erste Klarlackschicht als Zwischenschicht und
(C) eine zweite Klarlackschicht als oberste Schicht,
**dadurch gekennzeichnet, daß** die zweite Klarlackschicht (C) herstellbar ist aus einem Beschichtungsstoff (C), enthaltend
(C1) mindestens ein Oligomer und/oder Polymer mit mindestens einer seitenständigen Carbamatgruppe und/oder Allophanatgruppe (c11), insbesondere Carbamatgruppe (C11), der Formeln:
**-O-(CO)-NH**_{**2**} **-O-(CO)-NH-(CO)-NH**_{**2**}
und
(C2) mindestens einem Vernetzungsmittel, enthaltend mindestens 2 funktionelle Gruppen (c21), welche mit der Carbamatgruppe und/oder Allophanatgruppe (c11) Vernetzungsreaktionen eingehen.

2. Verfahren zur Herstellung einer hochkratzfesten Mehrschichtlackierung, das mindestens die folgenden Verfahrensschritte umfaßt:
(I) Applikation eines Basislacks (A) auf einem gegebenenfalls grundierten Substrat,
(II) Zwischentrocknen des applizierten Basislacks (A),
(III) Applikation eines ersten Klarlacks (B),
(IV) gemeinsames Aushärten der in den Verfahrensschritten (I) und (III) applizierten Schichten (A) und (B) (Naß-in-naß-Verfahren),
**dadurch gekennzeichnet, daß**
(V) auf die im Verfahrensschritt (IV) ausgehärtete Klarlackschicht (B) eine stofflich hiervon verschiedene zweite Klarlackschicht (C), enthaltend
(C1) mindestens ein Oligomer und/oder Polymer mit mindestens einer seitenständigen Carbamatgruppe und/oder Allophanatgruppe (c11), insbesondere Carbamatgruppe (C11), der Formeln:
**O(CO)NH**_{**2**} **-O-(CO)-NH-(CO)-NH**_{**2**}
und
(C2) mindestens einem Vernetzungsmittel, enthaltend mindestens 2 funktionelle Gruppen (c21), welche mit der Carbamatgruppe und/oder Allophanatgruppe Vernetzungsreaktionen eingehen;
appliziert und
(VI) ausgehärtet wird.

3. Verfahren zur Herstellung einer hochkratzfesten Mehrschichtlackierung, das mindestens die folgenden Verfahrensschritte umfaßt:
(I) Applikation eines Basislacks (A) auf einem gegebenenfalls grundierten Substrat,
(II) Zwischentrocknen des applizierten Basislacks (A) und
(III) Applikation eines ersten Klarlacks (B),
**dadurch gekennzeichnet, daß**
(IV) der applizierte Klarlack (B) zwischengetrocknet wird und
(V) auf die zwischengetrocknete Klarlackschicht (B) eine stofflich hiervon verschiedene zweite Klarlackschicht (C), enthaltend
(C1) mindestens ein Oligomer und/oder Polymer mit mindestens einer seitenständigen Carbamatgruppe und/oder Allophanatgruppe (c11), insbesondere Carbamatgruppe (C11), der Formeln:
**-O-(CO)-NH**_{**2**} **-O-(CO)-NH-(CO)-NH**_{**2**}
und
(C2) mindestens einem Vernetzungsmittel, enthaltend mindestens 2 funktionelle Gruppen (c21), welche mit der Carbamatgruppe und/oder Allophanatgruppe Vernetzungsreaktionen eingehen;
appliziert wird, wonach
(VI) die Schichten (A), (B) und (C) gemeinsam eingebrannt werden.

4. Die hochkratzfeste Mehrschichtlackierung nach Anspruch 1, **dadurch gekennzeichnet, daß** das Oligomer und/oder Polymer (C1) ein Copolymerisat von ethylenisch ungesättigten Monomeren ist.

5. Die hochkratzfeste Mehrschichtlackierung nach Anspruch 4, **dadurch gekennzeichnet, daß** mindestens eines der ethylenisch ungesättigten Monomeren eine Carbamatgruppe und/oder eine Allophanatgruppe (c 11) enthält.

6. Die hochkratzfeste Mehrschichtlackierung nach einem der Ansprüche 1, 4 oder 5, **dadurch gekennzeichnet, daß** die Carbamatgruppe und/oder die Allophanatgruppe (c11) durch polymeranaloge Reaktionen in die Oligomeren und/oder Polymeren (C1) eingeführt werden.

7. Die hochkratzfeste Mehrschichtlackierung nach einem der Ansprüche 1 oder 4 bis 6, **dadurch gekennzeichnet, daß** das Vernetzungsmittel (C2) mindestens ein Aminoplastharz, ein Polysiloxan, eine Verbindung mit mindestens einer cyclischen Carbonatgruppe und/oder Polyanhydrid, insbesondere ein Aminoplastharz, ist.

8. Die hochkratzfeste Mehrschichtlackierung nach einem der Ansprüche 1 oder 4 bis 7, **dadurch gekennzeichnet, daß** der Beschichtungsstoff (C) mindestens eine gegebenenfalls blockierte Säure als Vernetzungskatalysator (C3) enthält.

9. Die hochkratzfeste Mehrschichtlackierung nach einem der Ansprüche 1 oder 4 bis 8, **dadurch gekennzeichnet, daß** der Beschichtungsstoff (C) mindestens eine Verbindung (C4) mit mindestens einer Epoxidgruppe enthält.

10. Die hochkratzfeste Mehrschichtlackierung nach Anspruch 9, **dadurch gekennzeichnet, daß** es sich bei der Verbindung (C4) um ein Poly(meth)acrylat mit seitenständigen Epoxidgruppen handelt.

11. Die hochkratzfeste Mehrschichtlackierung nach einem der Ansprüche 1 oder 4 bis 10, **dadurch gekennzeichnet, daß** die erste Klarlackschicht (B) herstellbar ist aus einem Beschichtungsstoff (B), enthaltend
(B1) mindestens ein Bindemittel mit funktionellen Gruppen (b11), welche mit den funktionellen Gruppen (b21) der Vernetzungsmittel (B2) Vernetzungsreaktionen eingehen, und
(B2) mindestens ein Vernetzungsmittel mit funktionellen Gruppen (b21), welche mit den funktionellen Gruppen (b11) der Bindemittel (B1) Vernetzungsreaktionen eingehen (Prinzip der komplementären Gruppen).

12. Die hochkratzfeste Mehrschichtlackierung nach Anspruch 11, **dadurch gekennzeichnet, daß** es sich bei den funktionellen Gruppen (b 11) um Thio -, Amino-, Hydroxy-, Carboxy-, Epoxy- und/oder (Meth)acrylatgruppen und bei den funktionellen Gruppen (b21) um Anhydrid-, Carboxy-, Epoxy-, Isocyanat-, blockierte Isocyanat-, Urethan-, Methylol-, Methylolether-, Siloxan-, Amino-, Hydroxy- und/oder beta-Hydroxyalkylamidgruppen und/oder mit aktinischer Strahlung vernetzbare ethylenisch ungesättigte Gruppen handelt.

13. Die hochkratzfeste Mehrschichtlackierung nach Anspruch 11 oder 12, **dadurch gekennzeichnet, daß** der Beschichtungsstoff (B) ein Einkomponenten(1K)-Klarlack, ein Zweikomponenten(2K)- oder Mehrkomponenten(3K, 4K)-Klarlack, ein Pulverklarlack oder ein Pulverslurry-Klarlack ist.

14. Die hochkratzfeste Mehrschichtlackierung nach Anspruch 13, **dadurch gekennzeichnet, daß** der Beschichtungsstoff (B) physikalisch, thermisch und/oder mit aktinischer Strahlung, insbesondere UV-Strahlung, härtbar ist.

15. Das Verfahren nach Anspruch 2 oder 3, **dadurch gekennzeichnet, daß** das Oligomer und/oder Polymer (C1) ein Copolymerisat von ethylenisch ungesättigten Monomeren ist.

16. Das Verfahren nach Anspruch 2 oder 3, **dadurch gekennzeichnet, daß** mindestens eines der ethylenisch ungesättigten Monomeren eine Carbamatgruppe und/oder eine Allophanatgruppe (c11) enthält.

17. Das Verfahren nach einem der Ansprüche 2, 3 oder 15, 16, **dadurch gekennzeichnet, daß** die Carbamatgruppe und/oder die Allophanatgruppe (c11) durch polymeranaloge Reaktionen in die Oligomeren und/oder Polymeren (C1) eingeführt werden.

18. Das Verfahren nach einem der Ansprüche 2, 3 oder 15 bis 17, **dadurch gekennzeichnet, daß** das Vernetzungsmittel (C2) mindestens ein Aminoplastharz, ein Polysiloxan, eine Verbindung mit mindestens einer cyclischen Carbonatgruppe und/oder Polyanhydrid, insbesondere ein Aminoplastharz, ist.

19. Das Verfahren nach einem der Ansprüche 2, 3 oder 15 bis 18, **dadurch gekennzeichnet, daß** der Beschichtungsstoff (C) mindestens eine gegebenenfalls blockierte Säure als Vernetzungskatalysator (C3) enthält.

20. Das Verfahren nach einem der Ansprüche 2, 3 oder 15 bis 19, **dadurch gekennzeichnet, daß** der Beschichtungsstoff (C) mindestens eine Verbindung (C4) mit mindestens einer Epoxidgruppe enthält.

21. Das Verfahren nach Anspruch 20, **dadurch gekennzeichnet, daß** es sich bei der Verbindung (C4) um ein Poly(meth)acrylat mit seitenständigen Epoxidgruppen handelt.

22. Das Verfahren nach einem der Ansprüche 2, 3 oder 15 bis 21, **dadurch gekennzeichnet, daß** die erste Klarlackschicht (B) herstellbar ist aus einem Beschichtungsstoff (B), enthaltend
(B1) mindestens ein Bindemittel mit funktionellen Gruppen (b11), welche mit den funktionellen Gruppen (b21) der Vernetzungsmittel (B2) Vernetzungsreaktionen eingehen, und
(B2) mindestens ein Vernetzungsmittel mit funktionellen Gruppen (b21), welche mit den funktionellen Gruppen (b11) der Bindemittel (B1) Vernetzungsreaktionen eingehen (Prinzip der komplementären Gruppen).

23. Das Verfahren nach Anspruch 22, **dadurch gekennzeichnet, daß** es sich bei den funktionellen Gruppen (b11) um Thio -, Amino-, Hydroxy-, Carboxy-, Epoxy- und/oder (Meth)acrylatgruppen und bei den funktionellen Gruppen (b21) um Anhydrid-, Carboxy-, Epoxy-, Isocyanat-, blockierte Isocyanat-, Urethan-, Methylol-, Methylolether-, Siloxan-, Amino-, Hydroxy- und/oder beta-Hydroxyalkylamidgruppen und/oder mit aktinischer Strahlung vernetzbare ethylenisch ungesättigte Gruppen handelt.

24. Das Verfahren nach Anspruch 22 oder 23, **dadurch gekennzeichnet, daß** der Beschichtungsstoff (B) ein Einkomponenten(1K)-Klarlack, ein Zweikomponenten(2K)- oder Mehrkomponenten(3K, 4K)-Klarlack, ein Pulverklarlack oder ein Pulverslurry-Klarlack ist.

25. Das Verfahren nach Anspruch 24, **dadurch gekennzeichnet, daß** der Beschichtungsstoff (B) physikalisch, thermisch und/oder mit aktinischer Strahlung, insbesondere UV-Strahlung, härtbar ist.

26. Substrate, insbesondere Bauteile für Automobilkarosserien, enthaltend die hochkratzfeste Mehrschichtlackierung gemäß einem der Ansprüche 1 oder 4 bis 14 und/oder die gemäß dem Verfahren nach einem der Ansprüche 2 bis 14 hergestellte hochkratzfeste Mehrschichtlackierung.

## Claims

1. Highly scratch-resistant multicoat paint system on a primed or unprimed substrate, comprising above one another in this order
(A) a basecoat,
(B) a first clearcoat as intermediate coat, and
(C) a second clearcoat as the topmost coat,
**characterized in that** the second clearcoat (C) is producible from a coating material (C) comprising
(C1) at least one oligomer and/or polymer containing at least one pendant carbamate group and/or allophanate group (c11), especially carbamate group (c11), of the formulae:
**-O-(CO)-NH**_{**2**} **-O-(CO)-NH-(CO)-NH**_{**2**}
and
(C2) at least one crosslinking agent containing at least two functional groups (c21) which undergo crosslinking reactions with the carbamate group and/or allophanate group (c11).

2. Process for producing a highly scratch-resistant multicoat paint system, comprising at least the following steps:
(I) applying a basecoat material (A) to a primed or unprimed substrate,
(II) carrying out interim drying of the applied basecoat material (A),
(III) applying a first clearcoat material (B), and
(IV) together curing the films (A) and (B) applied in steps (I) and (III) (wet-on-wet technique),
**characterized in that**
(V) applied to the clearcoat (B) cured in step (IV) is a materially different second clearcoat (C) comprising
C1) at least one oligomer and/or polymer containing at least one pendant carbamate group and/or allophanate group (c11), especially carbamate group (c11), of the formulae:
**-O-(CO)-NH**_{**2**} **-O-(CO)-NH-(CO)-NH**_{**2**}
and
(C2) at least one crosslinking agent containing at least two functional groups (c21) which undergo crosslinking reactions with the carbamate group and/or allophanate group;
and
(VI) curing is carried out.

3. Process for producing a highly scratch-resistant multicoat paint system, comprising at least the following steps:
(I) applying a basecoat material (A) to a primed or unprimed substrate,
(II) carrying out interim drying of the applied basecoat (A), and
(III) applying a first clearcoat material (B),
**characterized in that**
(IV) interim drying of the applied clearcoat material (B) is carried out and
(V) applied to the interim-dried clearcoat film (B) is the materially different second clearcoat film (C), comprising
(C1) at least one oligomer and/or polymer containing at least one pendant carbamate group and/or allophanate group (c11), especially carbamate group (c11), of the formulae
**-O-(CO)-NH**_{**2**} **-O-(CO)-NH-(CO)-NH**_{**2**}
and
(C2) at least one crosslinking agent containing at least two functional groups (c21) which undergo crosslinking reactions with the carbamate group and/or allophanate group; after which
(VI) the films (A), (B) and (C) are baked together.

4. The highly scratch-resistant multicoat paint system according to Claim 1, **characterized in that** the oligomer and/or polymer (C1) is an addition copolymer of ethylenically unsaturated monomers.

5. The highly scratch-resistant multicoat paint system according to Claim 4, **characterized in that** at least one of the ethylenically unsaturated monomers contains a carbamate group and/or an allophanate group (c11).

6. The highly scratch-resistant multicoat paint system according to any of Claims 1, 4 and 5, **characterized in that** the carbamate group and/or the allophanate group (c11) are/is introduced into the oligomers and/or polymers (C1) by means of polymer-analogous reactions.

7. The highly scratch-resistant multicoat paint system according to any of Claims 1 and 4 to 6, **characterized in that** the crosslinking agent (C2) is at least one amino resin, a polysiloxane, a compound containing at least one cyclic carbonate group and/or polyanhydride, in particular an amino resin.

8. The highly scratch-resistant multicoat paint system according to any of Claims 1 and 4 to 7, **characterized in that** the coating material (C) comprises at least one blocked or unblocked acid as crosslinking catalyst (C3).

9. The highly scratch-resistant multicoat paint system according to any of Claims 1 and 4 to 8, **characterized in that** the coating material (C) comprises at least one compound (C4) containing at least one epoxide group.

10. The highly scratch-resistant multicoat paint system according to Claim 9, **characterized in that** the compound (C4) comprises a poly(meth)acrylate containing pendant epoxide groups.

11. The highly scratch-resistant multicoat paint system according to any of Claims 1 and 4 to 10, **characterized in that** the first clearcoat (B) is producible from a coating material (B) comprising
(B1) at least one binder containing functional groups (b11) which undergo crosslinking reactions with the functional groups (b21) of the crosslinking agents (B2), and
(B2) at least one crosslinking agent containing functional groups (b21) which undergo crosslinking reactions with the functional groups (b11) of the binders (B1) (principle of complementary groups).

12. The highly scratch-resistant multicoat paint system according to Claim 11, **characterized in that** the functional groups (b11) are thio, amino, hydroxyl, carboxyl, epoxy and/or (meth)acrylate groups and the functional groups (b21) are anhydride, carboxyl, epoxy, isocyanate, blocked isocyanate, urethane, methylol, methylol ether, siloxane, amino, hydroxyl and/or beta-hydroxyalkylamide groups and/or ethylenically unsaturated groups crosslinkable with actinic radiation.

13. The highly scratch-resistant multicoat paint system according to Claim 11 or 12, **characterized in that** the coating material (B) is a one-component (1K) clearcoat material, a two-component (2K) clearcoat material or a multicomponent (3K, 4K) clearcoat material, a powder clearcoat material or a powder slurry clearcoat material.

14. The highly scratch-resistant multicoat paint system according to Claim 13, **characterized in that** the coating material (B) is curable physically, thermally and/or with actinic radiation, especially UV radiation.

15. The process according to Claim 2 or 3, **characterized in that** the oligomer and/or polymer (C1) is an addition copolymer of ethylenically unsaturated monomers.

16. The process according to Claim 2 or 3, **characterized in that** at least one of the ethylenically unsaturated monomers contains a carbamate group and/or an allophanate group (c11).

17. The process according to any of Claims 2, 3 and 15, 16, **characterized in that** the carbamate group and/or the allophanate group (c11) are/is introduced into the oligomers and/or polymers (C1) by means of polymer-analogous reactions.

18. The process according to any of Claims 2, 3 and 15 to 17, **characterized in that** the crosslinking agent (C2) is at least one amino resin, a polysiloxane, a compound containing at least one cyclic carbonate group and/or polyanhydride, in particular an amino resin.

19. The process according to any of Claims 2, 3 and 15 to 18, **characterized in that** the coating material (C) comprises at least one blocked or unblocked acid as crosslinking catalyst (C3).

20. The process according to any of Claims 2, 3 and 15 to 19, **characterized in that** the coating material (C) comprises at least one compound (C4) containing at least one epoxide group.

21. The process according to Claim 20, **characterized in that** the compound (C4) comprises a poly(meth)-acrylate containing pendant epoxide groups.

22. The process according to any of Claims 2, 3 and 15 to 21, **characterized in that** the first clearcoat (B) is producible from a coating material (B) comprising
(B1) at least one binder containing functional groups (b11) which undergo crosslinking reactions with the functional groups (b21) of the crosslinking agents (B2), and
(B2) at least one crosslinking agent containing functional groups (b21) which undergo crosslinking reactions with the functional groups (b11) of the binders (B1) (principle of complementary groups).

23. The process according to Claim 22, **characterized in that** the functional groups (b11) are thio, amino, hydroxyl, carboxyl, epoxy and/or (meth)-acrylate groups and the functional groups (b21) are anhydride, carboxyl, epoxy, isocyanate, blocked isocyanate, urethane, methylol, methylol ether, siloxane, amino, hydroxyl and/or beta-hydroxyalkylamide groups and/or ethylenically unsaturated groups crosslinkable with actinic radiation.

24. The process according to Claim 22 or 23, **characterized in that** the coating material (B) is a one-component (1K) clearcoat material, a two-component (2K) clearcoat material or a multicomponent (3K, 4K) clearcoat material, a powder clearcoat material or a powder slurry clearcoat material.

25. The process according to Claim 24, **characterized in that** the coating material (B) is curable physically, thermally and/or with actinic radiation, especially UV radiation.

26. Substrates, particularly components for automobile bodies, comprising the highly scratch-resistant multicoat paint system according to any of Claims 1 and 4 to 14 and/or the highly scratch-resistant multicoat paint system produced in accordance with the process according to any of Claims 2 to 14.

## Revendications

1. Peinture multicouche à haute résistance aux rayures sur un support éventuellement doté d'une couche de fond, qui contient les unes au-dessus des autres et dans la succession indiquée:
(A) une couche de peinture de base,
(B) une première couche de vernis transparent qui sert de couche intermédiaire et
(C) une deuxième couche de vernis transparent qui sert de couche supérieure,
**caractérisée en ce que** la deuxième couche de vernis transparent (C) peut être constituée d'une substance de revêtement (C) qui contient
(C1) au moins un oligomère et/ou polymère qui contient au moins un groupe latéral carbamate et/ou un groupe latéral allophanate (c11), et en particulier un groupe carbamate (C11), de formules:
**-O-(CO)-NH**_{**2**} **-O-(CO)-NH-(CO)-NH**_{**2**}
et
(C2) au moins un agent de réticulation qui contient au moins 2 groupes fonctionnels (c21) qui entrent en réaction de réticulation avec le groupe carbamate et/ou le groupe allophanate (c11).

2. Procédé de réalisation d'une peinture multicouche à haute résistance aux rayures qui comporte au moins les étapes de traitement ci-dessous :
(I) application d'une peinture de base (A) sur un support éventuellement doté d'une couche de fond,
(II) séchage intermédiaire de la peinture de base (A) qui a été appliquée,
(III) application d'un premier vernis transparent (B),
(IV) durcissement commun des couches (A) et (B) appliquées dans les étapes (I) et (III) (procédé humide-humide),
**caractérisé en ce que**
(V) sur la couche de vernis transparent (B) durcie lors de l'étape (IV) du procédé, on applique une deuxième couche de vernis transparent (C) d'une substance différente, qui contient:
(C1) au moins un oligomère et/ou polymère qui présente au moins un groupe latéral carbamate et/ou un groupe latéral allophanate (c11) et en particulier un groupe carbamate (C11), de formules:
**-O-(CO)-NH**_{**2**} **-O-(CO)-NH-(CO)-NH**_{**2**}
et
(C2) au moins un agent de réticulation qui contient au moins 2 groupes fonctionnels (c21) qui entrent en réaction de réticulation avec le groupe carbamate et/ou le groupe allophanate, et
(VI) on durcit.

3. Procédé de réalisation d'une peinture multicouche à haute résistance aux rayures qui comporte au moins les étapes de traitement ci-dessous:
(I) application d'une peinture de base (A) sur un support éventuellement doté d'une couche de fond,
(II) séchage intermédiaire de la peinture de base (A) qui a été appliquée, et
(III) application d'un premier vernis transparent (B),
**caractérisé en ce que**
(IV) la couche de vernis transparent (B) qui a été appliquée reçoit un séchage intermédiaire et
(V) sur la couche de vernis transparent (B) qui a reçu un séchage intermédiaire, on applique une deuxième couche de vernis transparent (C) d'une substance différente, qui contient:
(C1) au moins un oligomère et/ou polymère qui présente au moins un groupe latéral carbamate et/ou un groupe latéral allophanate (c11) et en particulier un groupe carbamate (C11), de formules:
**-O-(CO)-NH**_{**2**} **-O-(CO)-NH-(CO)-NH**_{**2**}
et
(C2) au moins un agent de réticulation qui contient au moins 2 groupes fonctionnels (c21) qui entrent en réaction de réticulation avec le groupe carbamate et/ou le groupe allophanate, suite à quoi
(VI) les couches (A), (B) et (C) sont cuites ensemble.

4. Peinture multicouche à haute résistance aux rayures selon la revendication 1, **caractérisée en ce que** l'oligomère et/ou polymère (C1) est un copolymère de monomères éthyléniquement insaturés.

5. Peinture multicouche à haute résistance aux rayures selon la revendication 4, **caractérisée en ce qu'**au moins l'un des monomères éthyléniquement insaturés contient un groupe carbamate et/ou un groupe allophanate (c11).

6. Peinture multicouche à haute résistance aux rayures selon l'une quelconque des revendications 1, 4 ou 5, **caractérisée en ce que** le groupe carbamate et/ou le groupe allophanate (c11) sont insérés dans les oligomères et/ou polymères (C1) par des réactions analogues à la polymérisation.

7. Peinture multicouche à haute résistance aux rayures selon l'une quelconque des revendications 1 ou 4 à 6, **caractérisée en ce que** l'agent de réticulation (C2) est au moins une résine aminoplastique, un polysiloxane, un composé qui présente au moins un groupe carbonate cyclique et/ou un polyanhydride et est en particulier une résine aminoplastique.

8. Peinture multicouche à haute résistance aux rayures selon l'une quelconque des revendications 1 ou 4 à 7, **caractérisée en ce que** la substance de revêtement (C) contient comme catalyseur de réticulation (C3) au moins un acide éventuellement bloqué.

9. Peinture multicouche à haute résistance aux rayures selon l'une quelconque des revendications 1 ou 4 à 8, **caractérisée en ce que** la substance de revêtement (C) contient au moins un composé (C4) qui présente au moins un groupe époxy.

10. Peinture multicouche à haute résistance aux rayures selon la revendication 9, **caractérisée en ce que** le composé (C4) est un poly(méth)acrylate à groupes latéraux époxy.

11. Peinture multicouche à haute résistance aux rayures selon l'une quelconque des revendications 1 ou 4 à 10, **caractérisée en ce que** la première couche de vernis transparent (B) peut être préparée à partir d'une substance de revêtement (B) qui contient:
(B1) au moins un liant qui présente des groupes fonctionnels (b11) qui entrent en réaction de réticulation avec les groupes fonctionnels (b21) de l'agent de réticulation (B2) et
(B2) au moins un agent de réticulation qui présente des groupes fonctionnels (b21) qui entrent en réaction de réticulation avec les groupes fonctionnels (b11) du liant (B1) (principe des groupes complémentaires).

12. Peinture multicouche à haute résistance aux rayures selon la revendication 11, **caractérisée en ce que** les groupes fonctionnels (b11) sont des groupes thio, amino, hydroxy, carboxy, époxy et/ou (méth)acrylate, et **en ce que** les groupes fonctionnels (b21) sont des groupes anhydride, carboxy, époxy, isocyanate, isocyanate bloqués, uréthané, méthylol, méthyloléther, siloxane, amino, hydroxy, et/ou bêta-hydroxyalkylamide, et/ou des groupes éthyléniquement insaturés qui peuvent être réticulés à l'aide d'un rayonnement actinique.

13. Peinture multicouche à haute résistance aux rayures selon la revendication 11 ou 12, **caractérisée en ce que** la substance de revêtement (B) est un vernis transparent à un composant (1K), un vernis transparent à deux composants (2K) ou un vernis transparent à plusieurs composants (3K, 4K), un vernis transparent en poudre ou un vernis transparent en poudre sous forme de suspension.

14. Peinture multicouche à haute résistance aux rayures selon la revendication 13, **caractérisée en ce que** la substance de revêtement (B) peut être durcie physiquement, thermiquement et/ou avec un rayonnement actinique et en particulier un rayonnement UV.

15. Procédé selon la revendication 2 ou 3, **caractérisé en ce que** l'oligomère et/ou polymère (C1) est un copolymère de monomères éthyléniquement insaturés.

16. Procédé selon la revendication 2 ou 3, **caractérisé en ce qu'**au moins l'un des monomères éthyléniquement insaturés contient un groupe carbamate et/ou un groupe allophanate (c11).

17. Procédé selon l'une quelconque des revendications 2, 3 ou 15, 16, **caractérisé en ce que** le groupe carbamate et/ou le groupe allophanate (c11) sont insérés dans les oligomères et/ou polymères (C1) par des réactions analogues à la polymérisation.

18. Procédé selon l'une quelconque des revendications 2, 3 ou 15 à 17, **caractérisé en ce que** l'agent de réticulation (C2) est au moins une résine aminoplastique, un polysiloxane, un composé qui contient au moins un groupe carbonate cyclique et/ou un polyanhydride et en particulier une résine aminoplastique.

19. Procédé selon l'une quelconque des revendications 2, 3 ou 15 à 18, **caractérisé en ce que** la substance de revêtement (C) contient comme catalyseur de réticulation (C3) au moins un acide éventuellement bloqué.

20. Procédé selon l'une quelconque des revendications 2, 3 ou 15 à 19, **caractérisé en ce que** la substance de revêtement (C) contient au moins un composé (C4) qui présente au moins un groupe époxy.

21. Procédé selon la revendication 20, **caractérisé en ce que** le composé (C4) est un poly(méth)acrylate à groupes latéraux époxy.

22. Procédé selon l'une quelconque des revendications 2, 3 ou 15 à 21, **caractérisé en ce que** la première couche de vernis transparent (B) peut être préparée à partir d'une substance de revêtement (B) qui contient:
(B1) au moins un liant qui présente des groupes fonctionnels (b11) qui entrent en réaction de réticulation avec les groupes fonctionnels (b21) de l'agent de réticulation (B2) et
(B2) au moins un agent de réticulation qui présente des groupes fonctionnels (b21) qui entrent en réaction de réticulation avec les groupes fonctionnels (b11) du liant (B1) (principe des groupes complémentaires).

23. Procédé selon la revendication 22, **caractérisé en ce que** les groupes fonctionnels (b11) sont des groupes thio, amino, hydroxy, carboxy, époxy et/ou (méth)acrylate, et **en ce que** les groupes fonctionnels (b21) sont des groupes anhydride, carboxy, époxy, isocyanate, isocyanate bloqués, uréthane, méthylol, méthyloléther, siloxane, amino, hydroxy, et/ou bêta-hydroxyalkylamide, et/ou des groupes éthyléniquement insaturés qui peuvent être réticulés à l'aide d'un rayonnement actinique.

24. Procédé selon la revendication 22 ou 23, **caractérisé en ce que** la substance de revêtement (B) est un vernis transparent à un composant (1K), un vernis transparent à deux composants (2K) ou un vernis transparent à plusieurs composants (3K, 4K), un vernis transparent en poudre ou un vernis transparent en poudre sous forme de suspension.

25. Procédé selon la revendication 24, **caractérisé en ce que** la substance de revêtement (B) peut être durcie physiquement, thermiquement et/ou avec un rayonnement actinique et en particulier un rayonnement UV.

26. Supports, en particulier composants pour carrosseries d'automobiles, qui contiennent la peinture multicouche à haute résistance aux rayures selon l'une quelconque des revendications 1 ou 4 à 14 et/ou la peinture multicouche à haute résistance aux rayures préparée avec le procédé selon l'une quelconque des revendications 2 à 14.
